# EUROPEAN PATENT SPECIFICATION

(11) **EP 0 669 867 B1**
(45) Date of publication and mention of the grant of the patent: **19.02.1997**
(21) Application number: 94902126.5
(22) Date of filing: 16.11.1993
(51) Int. Cl.: B29C 63/34

(54) **METHOD FOR LINING A PIPELINE, IN PARTICULAR A SEWER**
VERFAHREN ZUM INNENVERKLEIDEN EINES ROHRS INSBESONDERE EINER ABWASSERKANALS
PROCEDE DE REVETEMENT DE L'INTERIEUR D'UNE CANALISATION, NOTAMMENT UN EGOUT

(30) Priority: 23.11.1992 NL 9202030
(43) Date of publication of application: 06.09.1995
(73) Proprietor: WAVIN B.V., NL-8011 CW Zwolle (NL)
(72) Inventor: KÖSTRING, Volker, D-4477 Twist (DE); VAN HOUTEN, Jan, Anne, NL-7943 HK Meppel (NL); VAN DIJK, Berend, Jan, NL-7776 XA Slagharen (NL); ELZINK, Willem, Johan, NL-7701 LG Dedemsvaart (NL); REDDER, Hermanus, Antonius, NL-7701 PX Dedemsvaart (NL)
(74) Representative: Iemenschot, Johannes Andreas, Ir.
(86) International application number: NL9300242
(87) International publication number: WO9412336

(56) References cited:
- EP-A- 0 301 697

## Description

The present invention relates to a method for lining a pipeline, in particular a sewer, by means of a deformed pipe liner section with a wall made of thermoplastic material, comprising inserting the pipe liner section into the pipeline, shutting off the pipe liner section at its ends, in a first step supplying a heating and pressure medium to the inside of the shut-off pipe liner section, for the purpose of supplying heat to the pipe liner section and exerting a first pressure on the pipe liner section, so that the latter comes to rest against the inside of the pipeline, and in a second step, after the wall of the pipe liner section has reached a predetermined temperature profile and the supply of heat has been put to a stop, supplying a pressure medium to the inside of the shut-off pipe liner section, for the purpose of exerting a second pressure on the pipe liner section, which second pressure is higher than the first pressure.

Such a method is known from EP 0,301,697. In the case of the known method, in a first step heat is supplied by means of hot fluid to a previously deformed pipe liner section and a first pressure is exerted on the pipe liner section, so that the latter returns virtually to its original undeformed shape. Subsequently, in a second step the pressure on the pipe liner section is increased to a second pressure. This second pressure is maintained at a constant high value for a specific period. In this known process, in order to ensure that the pipe liner section comes to rest in a sufficiently tight fit against the inside of the pipeline, it is necessary to either work at very high pressures, which give rise to a large risk of tearing or cracking of the pipe liner section, and/or to use a close-fitting plug driven by cold water through the pipe liner section. This is a time-consuming method.

The object of the invention is to provide an improved method according to the preamble which results in a much lower risk of cracks in the pipe liner section and allows an excellent tight fit of the lines, and is characterized in that the second pressure is gradually increased. This ensures that the stress produced in the wall of the pipe liner section by the second pressure has a trend similar to the increasing admissible yield stress in the wall of the pipe liner section at the falling temperature of the pipe liner section during this second step. In this way it is ensured that the pipe liner section lies in a tight fit against the inside of the pipeline. This also makes it possible to increase the diameter of the pipe liner section during the installation in such a way that pipelines with a wide variation of internal diameters can be lined with a pipe liner section of one specific size, so that a smaller range of pipe liner sections will suffice.

The second pressure is preferably regulated depending on the yield stress in the wall of the pipe liner section which is admissible at a reference temperature of the wall of the pipe liner section.

In an advantageous embodiment of the method, the second pressure is regulated depending on the measured diameter of a part of the pipe liner section not lying inside the pipeline. The second pressure is preferably regulated in such a way here that a constant increase in diameter occurs until a predetermined value is reached.

In another embodiment, the second pressure is regulated depending on time. Such a method will be possible in particular if on the basis of experience the curve of the temperature drop in the second step is approximately known, so that no reference temperature of the wall need be determined.

The second pressure advantageously causes a stress in the wall of the pipe liner section that approximately corresponds to half the yield stress at a reference temperature of the wall of the pipe liner section.

The temperature profile of the wall of the pipe liner section is preferably determined by measuring the temperature of the outside of the wall and of the inside of the wall.

The reference temperature of the wall of the pipe liner section is also preferably determined by measuring the temperature of the outside of the wall and of the inside of the wall, and then determining the average value of the two temperatures.

It is advantageous here for the temperature of the inside of the wall to be measured at a point situated at a distance from the point where the heating and pressure medium is supplied.

The method according to the invention will be explained below with reference to the drawing, in which:
Fig. 1 shows a diagrammatic view of the installation of a deformed pipe liner section in a pipeline; and
Fig. 2 shows an example of the curve of the second pressure in the case of the method according to the invention.

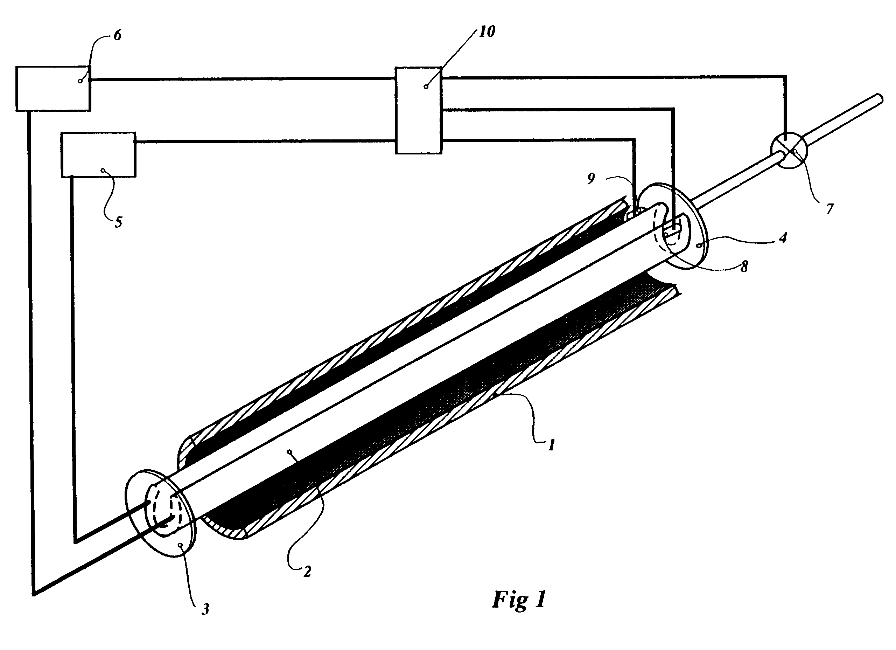

Figure 1 shows a pipe liner section 2 of thermoplastic material placed in a pipeline 1 to be lined. In the deformed configuration the pipe liner section shown has an essentially C-shaped cross-section, while its original, undeformed shape is cylindrical. However, the method according to the invention can also be used for the installation of other pipe liners of thermoplastic material, such as pipes of which the diameter has been radially reduced. After the pipe liner section 2 has been drawn into the pipeline 1 by suitable means, the two ends of the pipe liner section are shut off by shut-off elements 3, 4. A heating medium source 5 and a pressure medium source 6 are then connected to bores in the shut-off element 3. A control valve 7 is also connected to a bore in the shut-off element 4. For determining the temperature profile of the wall of the pipe liner section 2, temperature measuring elements 8, 9 are fitted on the inside and the outside respectively of the wall at an end of the pipe liner section 2 which just projects outside the pipeline 1, for example in a manhole or in an open trench. The signals from the temperature measuring elements 8, 9 are fed to a control device 10, which is connected to the heating medium source 5 and the pressure medium source 6. Other signals, for example relating to the pressure in the Inside of the pipe liner section 2, can also be fed to the control device 10. The method for installing the pipe liner section 2 in a close fit against the inside of the pipeline 1 which it is still in its deformed C-shaped configuration is as follows: In a first step, a heating and pressure medium, for example steam, is fed from the heating medium source 5 to the inside of the pipe liner section 2. This causes the temperature of the wall of the pipe liner section to rise, and a first pressure is exerted on the pipe liner section. As a result of the rise in the temperature of the wall, the shape memory of the thermoplastic material of the pipe liner section, assisted by the first pressure, causes the pipe liner section 2 to return virtually to its original, cylindrical cross-section. The rise in the temperature of the wall is determined by the temperature measuring elements 8, 9. In this case the outside of the wall will usually have a lower temperature than the inside of the wall, because the outside of the wall is in contact with the cold environment. The signals from both temperature measuring elements 8, 9 are used for controlling the method. The supply of heat to the pipe liner section is put to a stop when the temperature measuring element 8 placed on the inside of the wall indicates approximately the value of the temperature of the heating medium and the temperature measuring element 9 on the outside of the wall indicates a virtually constant value. The second step of the method is then carried out, with the object of ensuring that the pipe liner section 2 comes to rest in a tight fit against the inside of the pipeline 1. For this purpose, a pressure medium, for example compressed air, is fed from the pressure medium source 6 to the inside of the pipe liner section 2, as a result of which a second pressure is exerted on the pipe liner section. The pipe liner section will gradually cool down by giving off heat to its environment. An additional cooling medium may be fed in if necessary. The second pressure causes a stress in the wall of the pipe liner section, as a result of which the latter is pressed against the pipeline. When the temperature of the wall of the pipe liner 2 section drops, the admissible yield stress of the plastic material of the wall increases. In order to ensure that the second pressure exerted on the pipe liner section continues to press the wall of the pipe liner section forcefully against the pipeline, the second pressure is gradually increased. In the case of the arrangement shown, the second pressure is regulated by control device 10 depending on a reference temperature of the wall determined by the temperature elements 8, 9. In this case the reference temperature is the average of the temperatures of the outside and the inside of the wall. If on the basis of experience the decline of the temperature of the wall after ending of the supply of heat to the pipe liner section is approximately known, a control device which is time-dependent will suffice. In the second step the second pressure is regulated in such a way that it causes a stress in the wall of the pipe liner section which approximately corresponds to half the yield stress at the reference temperature of the wall of the pipe liner section.

In the case of the method according to the invention, the diameter of the pipe liner section in the undeformed state can correspond to the inside diameter of the pipeline 1 to be lined, so that the pipe liner section comes to rest against the inside of the pipeline during the first step. The method described also makes it possible to install a pipe liner section in a close fit in a pipeline, the diameter of the pipe liner section in the undeformed state being slightly smaller than the inside diameter of the pipeline to be lined, in practice up to about 6% smaller. When such a pipe liner section is being installed it does not yet lie against the inside of the pipeline after the first step. The second pressure exerted in the second step is then regulated in such a way that the diameter of the pipe liner section increases, so that it comes to rest in a close fit against the pipeline. In this way it is possible to accommodate variations in inside diameters of the pipelines to be lined, and a smaller range of pipe liner sections will suffice for lining the large number of sizes of pipelines.

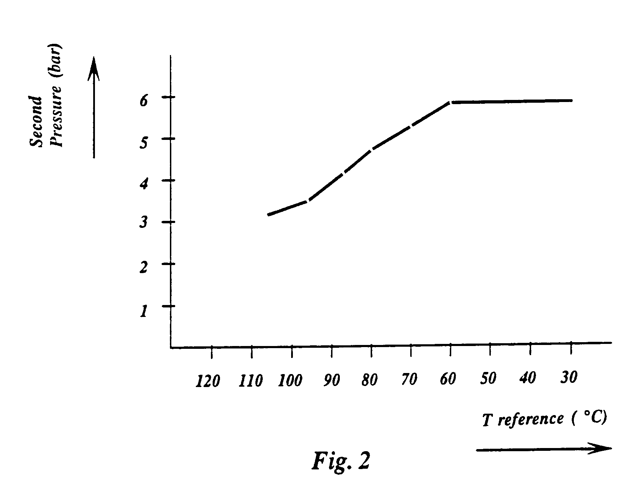

Figure 2 shows the curve of the second pressure in the case of the example which follows of the installation of a pipe liner section in the manner described in connection with Figure 1. The pipe liner section is made of high-density polyethylene (HDPE), and in the undeformed state has a diameter of 200 mm and a wall thickness of 12 mm. The crystalline melting temperature of the plastic material is about 130°C. After the pipe liner section has been drawn into the pipeline and the ends of the pipe liner section have been shut off, in a first step steam at a temperature of 126 - 127°C and a pressure of 1.4 - 1.45 bar is fed in. This causes the pipe liner section quickly to assume its original cylindrical shape. The supply of steam is continued until the temperature of the inside of the wall is 125°C and the temperature of the outside of the wall is 85°C. It is pointed out here that the temperature of the outside of the wall ultimately reaches a virtually constant value through heat loss to the cold environment. If the wall has reached the abovementioned temperature profile, the supply of steam is put to a stop and in a second step a second pressure is exerted immediately on the pipe liner section by means of compressed air. According to the invention, the second pressure is gradually increased. This is carried out here depending on the reference temperature determined by the temperature measuring elements, which temperature is the average of the temperature of the inside and the outside of the wall, and depending on the yield stress in the wall of the pipe liner section which is admissible at that reference temperature. In this case the table below is used in this example.

| Reference temperature (°C) | Second pressure (bar) |
|---|---|
| 106 | 3.1 |
| 96 | 3.5 |
| 87 | 4.1 |
| 80 | 4.7 |
| 70 | 5.2 |
| 60 | 5.8 |

The second pressure of 5.8 bar is the maximum pressure in the given circumstances. This maximum pressure depends partly on the wall thickness of the pipe liner section, and partly on the capabilities of the equipment used for the installation, while it was ultimately found that a further increase in the second pressure did not result in any appreciable increase in the diameter of the pipe liner section at these lower temperatures. When the temperature of the wall falls further, the value of the second pressure is maintained until the second pressure is relieved completely when a temperature of about 30°C is reached. The stress caused in the wall of the pipe liner section by the second pressure mentioned in this example at the highest reference temperature is slightly greater than half the yield stress admissible at that reference temperature, while the stress at the lower reference temperatures lies slightly below this value.

In an advantageous embodiment of the method, after the first step the diameter of the pipe liner section is measured at a place where it is projecting out of the pipeline, for example in a gulley or in an open trench. It is then possible to relate the second pressure in the pipe liner section to the measured diameter during the second step and to regulate it in such a way that a continuous increase in the diameter is obtained until the desired final diameter is achieved. The control can be automated by linking the diameter measuring means to the control device 10.

## Claims

1. Method for lining a pipeline, in particular a sewer, by means of a deformed pipe liner section with a wall made of thermoplastic material, comprising inserting of the pipe liner section into the pipeline, shutting off the pipe liner section at its ends, in a first step supplying a heating and pressure medium to the inside of the shut-off pipe liner section, for the purpose of supplying heat to the pipe liner section and exerting a first pressure on the pipe liner section, so that the latter comes to rest against the inside of the pipeline, and in a second step, after the wall of the pipe liner section has reached a predetermined temperature profile and the supply of heat has ended, supplying a pressure medium to the inside of the shut-off pipe liner section, for the purpose of exerting a second pressure on the pipe liner section, which second pressure is higher than the first pressure, **characterized in that** the second pressure is gradually increased.

2. Method according to claim 1, **characterized in that** the second pressure is regulated depending on the yield stress in the wall of the pipe liner section which is admissible at a reference temperature of the wall of the pipe liner section.

3. Method according to claim 1, **characterized in that** the second pressure is regulated depending on the measured diameter of a part of the pipe liner section not lying inside the pipeline to be lined.

4. Method according to claim 1, **characterized in that** the second pressure is regulated depending on time.

5. Method according to one of the preceding claims, **characterized in that** the second pressure causes a stress in the wall of the pipe liner section that approximately corresponds to half the yield stress at a reference temperature of the wall of the pipe liner section.

6. Method according to one of the preceding claims, **characterized in that** the temperature profile of the wall of the pipe liner section is determined by measuring the temperature of the outside of the wall and of the inside of the wall.

7. Method according to one of the preceding claims, **characterized in that** the reference temperature of the wall of the pipe liner section is determined by measuring the temperature of the outside of the wall and of the inside of the wall, and then determining the average value of the two temperatures.

8. Method according to claim 6 or 7, **characterized in that** the temperature of the inside of the wall is measured at a point situated at a distance from the point where the heating and pressure medium is supplied.

## Patentansprüche

1. Verfahren zum Innenverkleiden einer Rohrleitung, insbesondere eines Abwasserkanals, mittels eines verformten Rohrauskleidungsabschnitts mit einer aus thermoplastischem Material gebildeten Wand, bei dem der Rohrauskleidungsabschnitt in die Rohrleitung eingesetzt wird, der Rohrauskleidungsabschnitt an seinen Enden abgesperrt wird, in einem ersten Schritt ein Heiz- und Druckmedium der Innenseite des abgesperrten Rohrauskleidungsabschnitts zugeführt wird zum Zwecke der Zuführung von Wärme zum Auskleidungsabschnitt und Ausübung eines ersten Druckes auf den Rohrauskleidungsabschnitt, so daß letzterer an der Innenseite der Rohrleitung zur Anlage kommt, und in einem zweiten Schritt, nachdem die Wand des Rohrauskleidungsabschnitts ein vorbestimmtes Temperaturprofil erreicht hat und die Zufuhr von Wärme beendet worden ist, ein Druckmedium der Innenseite des abgesperrten Rohrauskleidungsabschnitts zum Zwecke der Ausübung eines zweiten Druckes auf den Rohrauskleidungsabschnitt zugeführt wird, welcher zweite Druck höher als der erste Druck ist, dadurch gekennzeichnet, daß der zweite Druck allmählich erhöht wird.

2. Verfahren nach Anspruch 1, dadurch gekennzeichnet, daß der zweite Druck in Abhängigkeit von der Streckspannung in der Wand des Rohrauskleidungsabschnitts reguliert wird, die bei einer Bezugstemperatur der Wand des Rohrauskleidungsabschnitts zulässig ist.

3. Verfahren nach Anspruch 1, dadurch gekennzeichnet, daß der zweite Druck in Abhängigkeit von dem gemessenen Durchmesser eines Teils des Rohrleitungsabschnitts reguliert wird, der nicht im Inneren der auszukleidenden Rohrleitung liegt.

4. Verfahren nach Anspruch 1, dadurch gekennzeichnet, daß der zweite Druck in Abhängigkeit von der Zeit reguliert wird.

5. Verfahren nach einem der vorhergehenden Ansprüche, dadurch gekennzeichnet, daß der zweite Druck eine Spannung in der Wand des Rohrauskleidungsabschnitts hervorruft, die in etwa der Hälfte der Streckspannung bei einer Bezugstemperatur der Wand des Rohrauskleidungsabschnitts entspricht.

6. Verfahren nach einem der vorhergehenden Ansprüche, dadurch gekennzeichnet, daß das Temperaturprofil der Wand des Rohrauskleidungsabschnitts durch Messen der Temperatur der Außenseite der Wand und der Innenseite der Wand bestimmt wird.

7. Verfahren nach einem der vorhergehenden Ansprüche, dadurch gekennzeichnet, daß die Bezugstemperatur der Wand des Rohrauskleidungsabschnitts durch Messen der Temperatur der Außenseite der Wand und der Innenseite der Wand und dann Bestimmung des Durchschnittswertes der beiden Temperaturen bestimmt wird.

8. Verfahren nach Anspruch 6 oder 7, dadurch gekennzeichnet, daß die Temperatur der Innenseite der Wand an einem Punkt gemessen wird, der in einem Abstand von dem Punkt gelegen ist, an dem das Heiz- und Druckmedium zugeführt wird.

## Revendications

1. Procédé pour revêtir l'intérieur d'une canalisation, en particulier d'un égout, au moyen d'un tronçon de revêtement tubulaire déformé dont la paroi est en une matière thermoplastique, comprenant l'introduction du tronçon de revêtement tubulaire dans la canalisation, l'obturation du tronçon de revêtement tubulaire à ses extrémités, l'admission dans un premier temps d'un fluide chauffant sous pression à l'intérieur du tronçon de revêtement tubulaire obturé, dans le but de fournir de la chaleur au tronçon de revêtement tubulaire et d'exercer une première pression sur le tronçon de revêtement tubulaire, afin que ce dernier vienne reposer contre l'intérieur de la canalisation, et dans un second temps, après que la paroi du tronçon de revêtement tubulaire a atteint un profil de températures prédéterminé et que la fourniture de chaleur a cessé, l'admission d'un fluide sous pression à l'intérieur du tronçon de revêtement tubulaire obturé, dans le but d'exercer une seconde pression sur le tronçon de revêtement tubulaire, cette seconde pression étant supérieure à la première pression, caractérisé en ce que la seconde pression est augmentée progressivement.

2. Procédé selon la revendication 1, caractérisé en ce que la seconde pression est réglée en fonction de la limite d'élasticité dans la paroi du tronçon de revêtement tubulaire, qui peut être admise à une température de référence de la paroi du tronçon de revêtement tubulaire.

3. Procédé selon la revendication 1, caractérisé en ce que la seconde pression est réglée en fonction du diamètre mesuré d'une partie du tronçon de revêtement tubulaire, qui n'est pas située à l'intérieur de la canalisation devant être revêtue.

4. Procédé selon la revendication 1, caractérisé en ce que la seconde pression est réglée en fonction du temps.

5. Procédé selon l'une des revendications précédentes, caractérisé en ce que la seconde pression engendre, dans la paroi du tronçon de revêtement tubulaire, une contrainte qui correspond approximativement à la moitié de la limite d'élasticité à une température de référence de la paroi du tronçon de revêtement tubulaire.

6. Procédé selon l'une des revendications précédentes, caractérisé en ce que l'on détermine le profil des températures de la paroi du tronçon de revêtement tubulaire en mesurant la température de l'extérieur de la paroi et celle de l'intérieur de la paroi.

7. Procédé selon l'une des revendications précédentes, caractérisé en ce que l'on détermine la température de référence de la paroi du tronçon de revêtement tubulaire en mesurant la température de l'extérieur de la paroi et celle de l'intérieur de la paroi, et en déterminant ensuite la moyenne des deux températures.

8. Procédé selon la revendication 6 ou 7, caractérisé en ce que l'on mesure la température de l'intérieur de la paroi en un point situé à distance du point où le fluide chauffant sous pression est admis.
